# EUROPEAN PATENT APPLICATION

(11) **EP 3 035 717 A1**
(43) Date of publication of application: **22.06.2016**
(21) Application number: 14797642.7
(22) Date of filing: 12.06.2014
(51) Int. Cl.: H04W 4/12

(54) **METHOD AND DEVICE FOR SERVICE PROVISION, AND METHOD AND DEVICE FOR SERVICE REQUEST**

(30) Priority: 13.08.2013 CN 201310351485
(71) Applicant: ZTE Corporation, 518057 Shenzhen City, Guangdong Province (CN)
(72) Inventor: YANG, Aisong, Shenzhen Guangdong Province 518057 (CN); WU, Limei, Shenzhen Guangdong Province 518057 (CN)
(74) Representative: Novagraaf Technologies
(86) International application number: PCT/CN2014/079782
(87) International publication number: WO 2014/183722

(57) **Abstract**

Provided are a service provision method and apparatus, and a service request method and apparatus. According to the service provision method, a check code request of a terminal is received; a check code of the terminal is generated according to the check code request and is sent to the terminal; and a service request of the terminal is received, and a service is provided for the terminal according to the service request, wherein the service request includes: the check code and a user identifier of the terminal. By means of the technical solution, the problem caused by the inability to receive or send multimedia messages via Wireless Local Area Networks (WLANs) is solved, and a solution capable of obtaining information such as user numbers without the need of a Packet Data Protocol (PDP) context activation procedure and achieving receiving and sending of the multimedia messages is provided.

## Description

### Technical Field

The present disclosure relates to the field of communications, and in particular to a service provision method and apparatus, and a service request method and apparatus.

### Background

Currently, Wireless Local Area Networks (WLANs) are widely applied to home gateways and enterprise networks, all operators are energetically developing WLAN services, and operation-grade WLANs have also begun to take shape to provide WLAN broadband services for devices such as mobile phone terminals or tablet computers supporting WLAN functions at railway stations, airports and other indoor and outdoor places.

A Multimedia Messaging Service (MMS), also called multimedia messaging for short, can support multimedia functions and is capable of transferring full-featured contents and information including various multimedia formats such as characters, images, sounds and data. In the MMS, a Wireless Application Protocol (WAP) serves as a carrier to transmit information including various multimedia formats such as characters, images, sounds and data via data networks of the operators.

Currently, a basic procedure of the MMS is based on data networks of the operators. Taking China Mobile as an example, a user whose Access Point Name (APN) is set as a Control Memory Wireless Application Protocol (CMWAP) can inquire, via a WAP gateway, a multimedia message centre to which the user number belongs, contents of a multimedia message are sent to the multimedia message centre, and the multimedia message centre sends a PUSH message to a receiving party. Due to the fact that WLAN users do not need to access networks through devices such as a General Packet Radio Service (GPRS) Gateway Support Node (GGSN), the WAP gateway cannot be informed of user information in a Packet Data Protocol (PDP) context activation way. However, the WAP gateway will not accept any multimedia message request from anonymous user. Thus, under such a mode, users with non-CMWAP access points are not able to receive and send multimedia messages via other data bearer networks.

With the promotion of WLAN services and further popularization of intelligent terminals and tablet personal computers, there will be more and more WLAN users. When a user browses via the WLANs, he/she cannot share videos, audios or other contents via multimedia message functions borne by WLANs, and there still lacks a technology enabling the user to receive multimedia messages under the WLANs.

An effective solution for the problem caused by the inability to receive or send the multimedia messages via the WLANs in the related art is not proposed currently.

### Summary

The embodiments of the present disclosure provide a service provision method and apparatus, and a service request method and apparatus, which are intended to at least solve the problem caused by the inability to receive or send the multimedia messages via WLANs.

According to one aspect of the embodiments of the present disclosure, a service provision method is provided, which may include that: a check code request of a terminal is received; a check code of the terminal is generated according to the check code request and is sent to the terminal; and a service request of the terminal is received, and a service is provided for the terminal according to the service request, wherein the service request may include: the check code and a user identifier of the terminal.

In an example embodiment, the check code request may carry at least one of the following information: the user identifier of the terminal, time information and encryption key information.

In an example embodiment, the step that the service is provided for the terminal according to the service request may include that: the service request of the terminal is received; and it is verified that an identity of the terminal is legal according to the check code and the user identifier.

In an example embodiment, under a condition that the service is a multimedia message sending service, after it is verified that the identity of the terminal is legal, the step that the service is provided for the terminal according to the service request may further include that: multimedia message information that the terminal requests to send is sent to a multimedia message centre.

In an example embodiment, under a condition that the multimedia message information that the terminal requests to send is compressed multimedia message information, the step that the multimedia message information that the terminal requests to send is sent to the multimedia message centre may include that: the compressed multimedia message information is decompressed; and the decompressed multimedia message information is sent to the multimedia message centre.

In an example embodiment, under a condition that the service is a multimedia message receiving service, after it is verified that the identity of the terminal is legal, the step that the service is provided for the terminal according to the service request may further include that: the multimedia message information requested by the terminal is obtained from the multimedia message centre according to the service request; and the multimedia message information requested by the terminal is sent to the terminal.

In an example embodiment, the step that the multimedia message information requested by the terminal is sent to the terminal may include that: the multimedia message information requested by the terminal is compressed; and the compressed multimedia message information is sent to the terminal.

According to another aspect of the embodiments of the present disclosure, a service request method is also provided, which may include that: a check code request is sent to a WAP gateway; a check code is received, wherein the check code is generated by the WAP gateway according to the check code request; and a service request is sent to the WAP gateway, and a service is requested from the WAP gateway according to the service request, wherein the service request may include: the check code and a user identifier of a terminal.

According to another aspect of the embodiments of the present disclosure, a service provision apparatus is also provided, which may include: a receiving component, configured to receive a check code request of a terminal; a generating component, configured to generate a check code of the terminal according to the check code request and send the generated check code to the terminal; and a processing component, configured to receive a service request of the terminal and provide a service for the terminal according to the service request, wherein the service request may include: the check code and a user identifier of the terminal.

According to another aspect of the embodiments of the present disclosure, a service request apparatus is also provided, which may include: a sending component, configured to send a check code request to a WAP gateway; a receiving component, configured to receive a check code, wherein the check code is generated by the WAP gateway according to the check code request; and a processing component, configured to send a service request to the WAP gateway and request a service from the WAP gateway according to the service request, wherein the service request may include: the check code and a user identifier of a terminal.

By means of the embodiments of the present disclosure, a check code request of the terminal is received, a check code of the terminal is then generated according to the check code request, and the generated check code is sent to the terminal, a service request of the terminal is received and a service is provided for the terminal according to the user identifier of the terminal and the check code in the service request. In this way, the problem caused by the inability to receive or send the multimedia messages via the WLANs is solved, and a solution capable of obtaining information such as user numbers without the need of a PDP context activation procedure and achieving receiving and sending of the multimedia messages is provided.

### Brief Description of the Drawings

The drawings described herein are intended to provide further understanding of the present disclosure, and form a part of the present disclosure. The schematic embodiments and description of the present disclosure are intended to explain the present disclosure, and do not form improper limits to the present disclosure. In the drawings:
Fig. 1 is a flowchart of a service provision method according to an embodiment of the present disclosure;
Fig. 2 is a flowchart of a service request method according to an embodiment of the present disclosure;
Fig. 3 is a structural diagram of a service provision apparatus according to an embodiment of the present disclosure;
Fig. 4 is a structural diagram of a service request apparatus according to an embodiment of the present disclosure;
Fig. 5 is a flowchart of a method for achieving the support to a generic APN multimedia message function by a WAP gateway according to an example embodiment of the present disclosure;
Fig. 6 is a flowchart of a system for achieving a generic APN multimedia message function via a WAP gateway according to an example embodiment of the present disclosure; and
Fig. 7 is an interaction diagram of a system for achieving the support to a generic APN multimedia message by a WAP gateway according to an example embodiment of the present disclosure.

### Detailed Description of the Embodiments

It is important to note that the embodiments of the present disclosure and the characteristics in the embodiments can be combined under the condition of no conflicts. The present disclosure is described below with reference to the drawings and the embodiments in detail.

The steps shown in the flowcharts of the drawings may be executed in a computer system including, for instance, a group of computer executable instructions, and moreover, although a logical sequence is shown in the flowcharts, the shown or described steps can be executed in a sequence different from the sequence here under certain conditions.

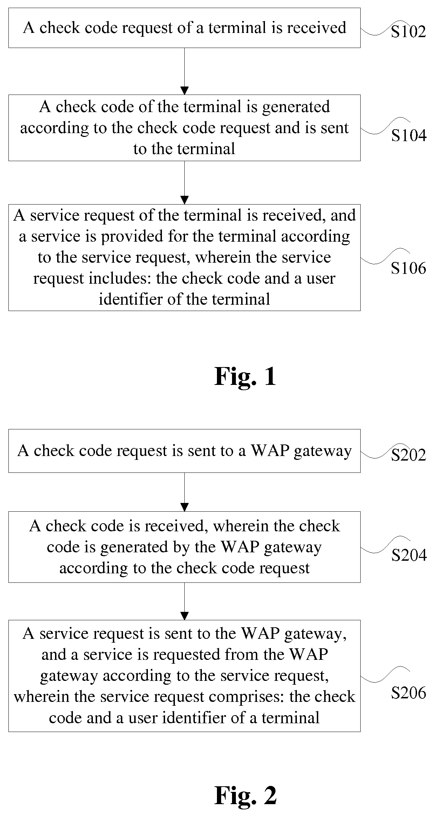

An embodiment of the present disclosure provides a service provision method. Fig. 1 is a flowchart of a service provision method according to an embodiment of the present disclosure. As shown in Fig. 1, the method may include that:
Step S102: a check code request of a terminal is received;
Step S104: a check code of the terminal is generated according to the check code request and is sent to the terminal; and
Step S106: a service request of the terminal is received, and a service is provided for the terminal according to the service request, wherein the service request includes: the check code and a user identifier of the terminal.

By means of the steps, a WAP gateway may authenticate the identity of the terminal by using the check code so as to be able to identify the identity information of the terminal, and then the corresponding service is provided for the terminal. Compared with the related art, the solution can complete, under the condition of no PDP context activation procedures, safe transfer of user information by using request information carrying the check code and the user identifier of the terminal, thereby solving the problem caused by the inability to receive or send multimedia messages via WLANs, and providing a solution capable of obtaining information such as user numbers without the need of a PDP context activation procedure and achieving receiving and sending of the multimedia messages.

In some example implementation ways, the check code request of the terminal is sent via a wireless internet and/or a wireless communication network, and the check code request may include the identity information of the terminal, such as the user identifier which includes an International Mobile Subscriber Identity (IMSI) number and/or an International Mobile Equipment Identity (EMSI) number. In addition, the check code request may further include: time information and encryption key information.

In an example embodiment, before the service is provided for the terminal, the legality of the identity of the terminal may be verified first according to the information carried in the service request. For example, the service request of the terminal is received, and it is verified that the identity of the terminal is legal according to the check code and the user identifier in the service request. In the way, the safety of a system is improved.

In the embodiment, the service provision method is further described by taking sending and receiving of an MMS as examples.

### Example 1:

For example, under a condition that the service is a multimedia message sending service, after the WAP gateway verifies that the identity of the terminal is legal, multimedia message information that the terminal requests to send may be sent to a multimedia message centre, and then the multimedia message centre informs a receiving party and sends the multimedia message information to the receiving party. In such a way, sending of a multimedia message is achieved.

In an example embodiment, in order to save the traffic for sending the multimedia message information by the terminal, the multimedia message information sent to the WAP gateway by the terminal may be compressed information, and after receiving the compressed multimedia message information, the WAP gateway may decompress the compressed multimedia message information and then send the decompressed multimedia message information to the multimedia message centre for processing.

In the above embodiments and examples, the multimedia message information sent to the WAP gateway by the terminal may be sent independently and may alternatively be sent via the service request.

### Example 2:

For another example, under a condition that the service is a multimedia message receiving service, after it is verified that the identity of the terminal is legal, the multimedia message information requested by the terminal may be obtained from the multimedia message centre according to the service request, and the multimedia message information requested by the terminal is sent to the terminal. In such a way, obtaining or receiving of the multimedia message is achieved.

In an example embodiment, in order to save the traffic for receiving the multimedia message information by the terminal, the WAP gateway may compress the multimedia message information requested by the terminal and then send the compressed multimedia message information to the terminal.

Another embodiment also provides a service request method corresponding to the service provision method. Corresponding function achieving can be understood with reference to the service provision method, so no further description is provided herein.

Fig. 2 is a flowchart of a service request method according to an embodiment of the present disclosure. As shown in Fig. 2, the method includes that:
Step S202: a check code request is sent to a WAP gateway;
Step S204: a check code is received, wherein the check code is generated by the WAP gateway according to the check code request; and
Step S206: a service request is sent to the WAP gateway, and a service is requested from the WAP gateway according to the service request, wherein the service request includes: the check code and a user identifier of a terminal.

The embodiment also provides a service provision apparatus configured to achieve the service provision method. The service provision apparatus described in the apparatus embodiment corresponds to the method embodiment, and a specific achieving process has been described in the method embodiment in detail and is no longer described in detail herein.

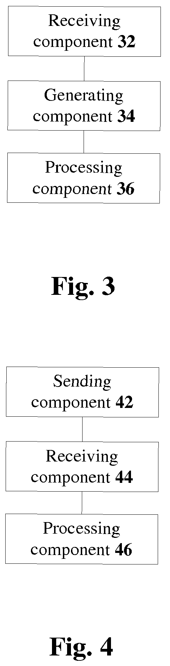

Fig. 3 is a structural diagram of a service provision apparatus according to an embodiment of the present disclosure. As shown in Fig. 3, the apparatus includes: a receiving component 32, a generating component 34 and a processing component 36, wherein the receiving component 32 is configured to receive a check code request of a terminal; the generating component 34 is coupled to the receiving component 32 and is configured to generate a check code of the terminal according to the check code request and send the generated check code to the terminal; and the processing component 36 is coupled to the generating component 34 and is configured to receive a service request of the terminal and provide a service for the terminal according to the service request, wherein the service request includes: the check code and a user identifier of the terminal.

The components and elements involved in the embodiment can be achieved in a software way or in a hardware way. The components and the elements described in the embodiment may also be arranged in a processor. For example, the technical solution may be described as: a processor including a receiving component 32, a generating component 34 and a processing component 36. It should be noted that the names of these components do not form limits to the components under certain conditions. For example, the receiving component may also be described as a component configured to receive the check code request of the terminal.

In an example embodiment, the check code request carries at least one of the following information: the user identifier of the terminal, time information and encryption key information.

In an example embodiment, the processing component 36 is further configured to: receive the service request of the terminal; and verify that an identity of the terminal is legal according to the service request.

In an example embodiment, under a condition that the service is a multimedia message sending service, after it is verified that the identity of the terminal is legal, the processing component 36 is further configured to send, to a multimedia message centre, multimedia message information that the terminal requests to send.

In an example embodiment, under a condition that the multimedia message information that the terminal requests to send is compressed multimedia message information, the processing component 36 is configured to send the multimedia message information that the terminal requests to send to the multimedia message centre in a following manner: the compressed multimedia message information is decompressed; and the decompressed multimedia message information is sent to the multimedia message centre.

In an example embodiment, under a condition that the service is a multimedia message receiving service, after it is verified that the identity of the terminal is legal, the processing component 36 is further configured to: obtain, from a multimedia message centre according to the service request, multimedia message information requested by the terminal; and send the multimedia message information requested by the terminal to the terminal.

In an example embodiment, the processing component 36 is configured to send the multimedia message information requested by the terminal to the terminal in a following manner: the multimedia message information requested by the terminal is compressed; and the compressed multimedia message information is sent to the terminal.

In an example embodiment, the service provision apparatus may be located in a WAP gateway.

The embodiment also provides a service request apparatus configured to achieve the service request method. The service request apparatus described in the apparatus embodiment can be described and explained with reference to the service provision method, the service provision apparatus and the service request method, so no further descriptions are given herein.

Fig. 4 is a structural diagram of a service request apparatus according to an embodiment of the present disclosure. As shown in Fig. 4, the apparatus includes: a sending component 42, a receiving component 44 and a processing component 46, wherein the sending component 42 is configured to send a check code request to a WAP gateway; the receiving component 44 is coupled to the sending component 42 and is configured to receive a check code, wherein the check code is generated by the WAP gateway according to the check code request; and the processing component 46 is coupled to the receiving component 44 and is configured to send a service request to the WAP gateway, and request a service from the WAP gateway according to the service request, wherein the service request includes: the check code and a user identifier of a terminal.

In an example embodiment, the service request apparatus may be located in the terminal.

The components and elements involved in the embodiments of the present disclosure may be achieved in a software way or in a hardware way. The components and the elements described in the embodiments may also be arranged in a processor. For example, the technical solution may be described as: a processor including a sending component 42, a receiving component 44 and a processing component 46. It should be noted that the names of these components do not form limits to these components under certain conditions. For example, the sending component may alternatively be described as a component configured to send the check code request to the WAP gateway.

Descriptions and explanations are given below with reference to an example embodiment.

The example embodiment provides a method and system for achieving a generic APN multimedia message function via a WAP gateway. By means of the present example embodiment, a WLAN user or a CMNET APN user can achieve a multimedia message sending and receiving function via the WAP gateway.

The method for achieving the generic APN multimedia message function via the WAP gateway includes the following steps which are described in detail as follows.
Step 1: terminal software sends a Hyper Text Transport Protocol (HTTP) registration request to the WAP gateway periodically;
Step 2: the WAP gateway generates an encryption check code according to current time, a pre-configured KEY and a mobile phone number carried in the request from the terminal;
Step 3: the WAP gateway sends a short message to the terminal via a Push Proxy Gateway (PPG) component;
Step 4: the WAP gateway returns a 200 OK response to the terminal;
Step 5: the terminal software receives the short message carrying the check code, and carries the check code in a multimedia message sending request (such as a POST request);
Step 6: the WAP gateway receives the multimedia message sending request of the terminal, and forwards the multimedia message sending request to a multimedia message centre;
Step 7: the multimedia message centre returns a response;
Step 8: the WAP gateway forwards the response to the terminal;
Step 9: the multimedia message centre sends a short message to a destination mobile phone to inform the destination mobile phone to fetch a multimedia message;
Step 10: the destination mobile phone sends a multimedia message receiving request to the WAP gateway, and the WAP gateway forwards the multimedia message receiving request to the multimedia message centre; and
Step 11: the multimedia message centre returns a response, and the WAP gateway sends the response to the terminal.

Preferably, before Step 6 is executed, the method may further include the following steps:
Step 61: the WAP gateway checks whether the mobile phone number of the user is in a white list, and if the user is an illegal user, an access is refused;
Step 62: the WAP gateway judges whether contents of the multimedia message have been compressed, and if the multimedia message have been compressed, the contents of the multimedia message are decompressed, and then the multimedia message is forwarded to the multimedia message centre; and
Step 63: the WAP gateway inquires a multimedia message centre to which the user belongs according to the mobile phone number of the user and forwards the request to the multimedia message centre to which the user belongs.

Preferably, before Step 10 is executed, the method may further include the following steps:
Step 101: the WAP gateway checks whether a check code of the user is valid, and if the check code of the user is not valid, the request is refused; and
Step 102: the WAP gateway checks whether the mobile phone number of the user is in the white list, and if the user is an illegal user, the access is refused.

Preferably, before Step 11 is executed, the method may further include the following steps:
Step 111: the WAP gateway judges whether the response is compressed, if the response is not compressed, contents of the response are compressed.

By means of the method provided by the example embodiment, a non-CMWAP user is enabled to send and receive the multimedia message via the WAP gateway. In an example embodiment, the user may not need to modify terminal hardware, and an operator may also not need to re-design network-side hardware. For example, the user may install specific software on an android intelligent terminal to achieve sending and receiving of the multimedia message of a non-CMWAP user via the software.

By adopting the method, the terminal software sends an HTTP registration message to the WAP gateway periodically first, a check code short message returned by the WAP gateway is received, and a registration code is updated; if an HTTP response code returned by the WAP gateway is not 200 OK, then the registration request is re-sent; when the user would like to send multimedia contents via the terminal software, the terminal software adds header information such as the mobile phone number of the user and the check code into a request header of the multimedia message sending request, and the request is sent to the WAP gateway; after receiving the request, the WAP gateway checks whether the mobile phone number of the user and the check code are valid; if they are not valid, the request is refused, and if they are valid, the contents of the multimedia message of the user are decompressed, and the multimedia message is forwarded to the multimedia message centre; the multimedia message centre sends a multimedia message receiving notification to the destination mobile phone using a PUSH message, and the mobile phone sends a multimedia message receiving request via the WAP gateway; after receiving the request, the WAP gateway checks whether the mobile phone number of the user and the check code are valid first, if they are not valid, the request is refused, and if they are valid, the request is forwarded to the multimedia message centre; and after receiving the response from the multimedia message centre, the WAP gateway judges whether the response meets compression conditions, if the response meets the compression conditions, the contents of the response are compressed in a gzip way (a compression way), and the response is sent to the terminal. In such a way, the WLAN user or the CMNET APN user can achieve receiving and sending of the multimedia message via the WAP gateway.

The example embodiment of the present disclosure is described below with reference to the drawings.

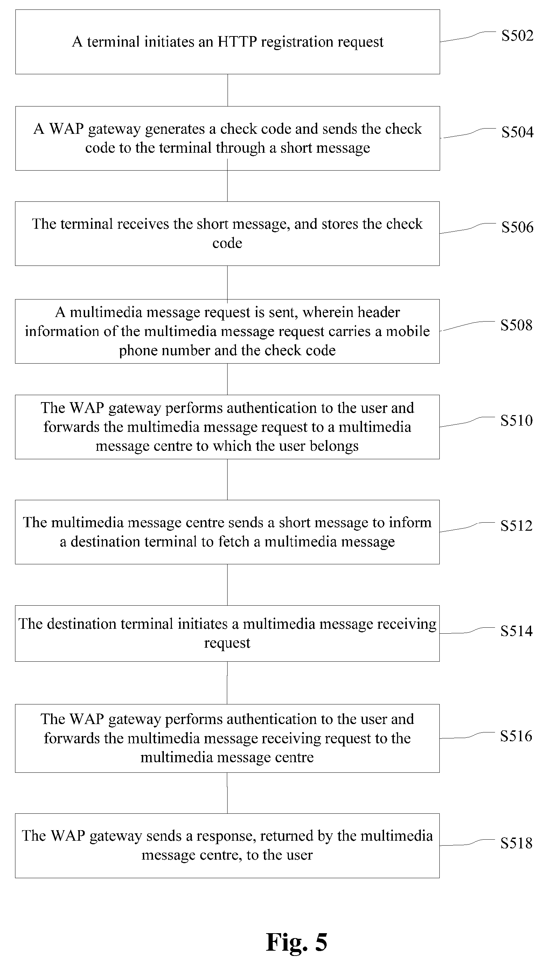

Fig. 5 is a flowchart of a method for achieving the support to a generic APN multimedia message function by a WAP gateway according to an example embodiment of the present disclosure. As shown in Fig. 5, the method includes the following steps which are described in detail as follows.
S502: terminal software initiates a registration request in an HTTP way periodically;
S504: the WAP gateway checks user information and returns a check code in a short messaging way;
S506: the terminal software receives a short message, and records the check code;
S508: a user sends a multimedia message via the terminal software, wherein header information of the request carries user number information and check code information;
S510: the WAP gateway performs authentication to the user number and the check code, decompresses the contents of the multimedia message and forwards the multimedia message request to a multimedia message centre to which the user belongs;
S512: the multimedia message centre sends a short message to a receiving party in a PUSH message way;
S514: the terminal software of the receiving party receives the short message, and initiates a multimedia message receiving request;
S516: the WAP gateway performs authentication to the user and forwards the multimedia message receiving request to the multimedia message centre; and
S518: after the multimedia message centre returns a response, the WAP gateway compresses contents of the response and sends the response to the terminal.

In the present example embodiment, the WAP gateway may also add a white list policy so as to perform access control based on the mobile phone number of the user. Moreover, the WAP gateway may also control the valid duration and valid frequency of the sent check code, and refuse a request which does not meet the valid usage frequency or the valid duration.

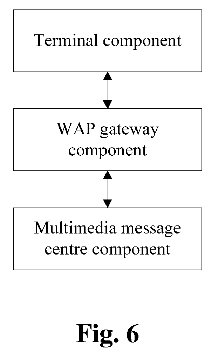

Fig. 6 is a flowchart of a system for achieving a generic APN multimedia message function via a WAP gateway according to an example embodiment of the present disclosure. As shown in Fig. 6, the system includes: a terminal software component (also called a terminal component configured to achieve functions of the service request apparatus), a WAP gateway component (configured to achieve corresponding functions of the service provision apparatus), and a multimedia message centre component (equivalent to the multimedia message centre), wherein the terminal software component, the WAP gateway component and the multimedia message centre component are connected in sequence.

The terminal software component is configured, for a user, to send a registration message and a multimedia message request to a WAP gateway and obtain a multimedia message.

The WAP gateway component is configured to authenticate the user, decompress contents of the multimedia message, send the multimedia message to the multimedia message centre, receive a response from the multimedia message centre, compress the response, and then send the response to the terminal software component.

The multimedia message centre component is configured to receive a multimedia message sending request of the user, and send a message to inform a receiving party terminal to receive the multimedia message.

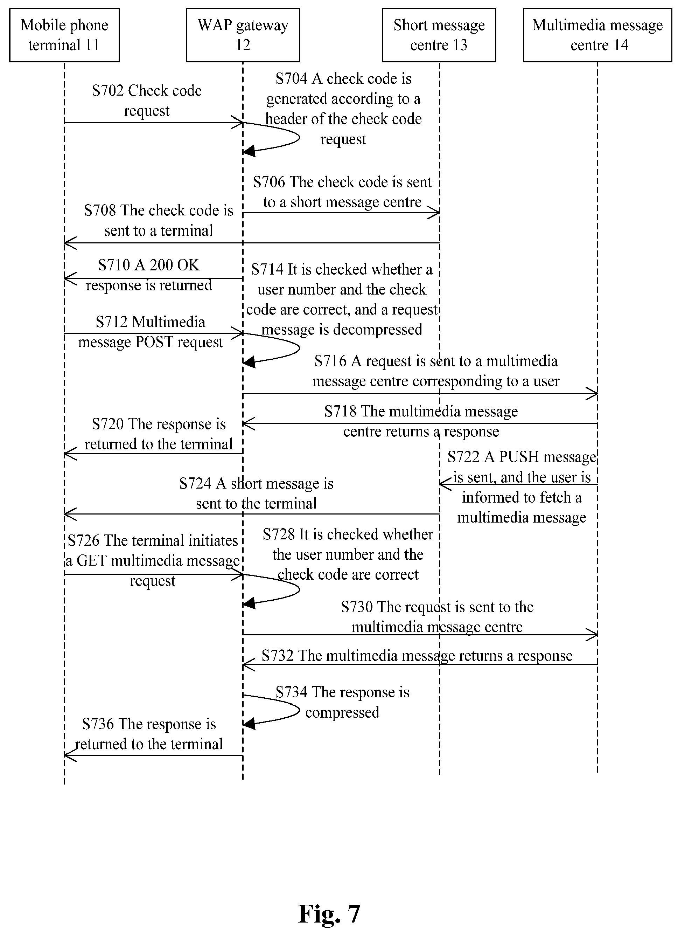

Preferably, the method and system for achieving the generic APN multimedia message supported by the WAP gateway according to the example embodiment relate to four logical entities: the terminal software component (located in a mobile phone terminal), the WAP gateway component (located in the WAP gateway), the multimedia message centre component (located in the multimedia message centre) and a short message centre component (located in a short message centre). Fig. 7 is an interaction diagram of a system for achieving the support to a generic APN multimedia message by a WAP gateway according to an example embodiment of the present disclosure. As shown in Fig. 7, the interaction process includes the following steps which are described in detail as follow.
Step S702: a terminal software component sends a registration message to a WAP gateway component in an HTTP way periodically;
Step S704: the WAP gateway component checks a registration request, and generates a check code according to current time, an encryption key and a mobile phone number carried in a request header;
Step S706: the WAP gateway component sends the check code to a short message centre component;
Step S708: the short message centre component sends the check code to a terminal in a short messaging way;
Step S710: the WAP gateway component returns a 200 OK response to the terminal;
Step S712: mobile phone terminal software initiates a multimedia message sending request to the WAP gateway component, wherein header information of the request carries mobile phone number information and check code information;
Step S714: the WAP gateway component checks a user number and the check code, decompresses a request message, and inquires an ENUMDNS to obtain a multimedia message centre to which the user belongs;
Step S716: the WAP gateway sends a multimedia message request to the multimedia message centre to which the user belongs;
Step S718: the multimedia message centre returns a response to the WAP gateway;
Step S720: the WAP gateway returns the response to the mobile phone terminal software;
Step S722: the multimedia message centre sends a message to the short message centre;
Step S724: the short message centre sends the message to a receiving party terminal mobile phone to inform the user to receive a short message;
Step S726: the terminal software component receives the multimedia message, then initiates and sends a multimedia message receiving request to the WAP gateway, wherein the request header carries the mobile phone number information and the check code information;
Step S728: the WAP gateway checks whether the user number and the check code are correct;
Step S730: the WAP gateway forwards a request to the multimedia message centre;
Step S732: the multimedia message centre returns a response;
Step S734: the WAP gateway compresses the response; and
Step S736: the WAP gateway forwards the response to the terminal software.

By means of solutions provided by the embodiments, example embodiments and example implementation ways of the present disclosure, the service request of the user is authenticated via the check code to prevent the service request of the terminal from maliciously carrying illegal mobile phone number header information. When other APNs such as a China Mobile NET (CMNET) APN are used, the source of the request may be a GGSN from the point of view of the WAP gateway. However, due to the absence of a PDP context activation procedure, the user mobile phone information can be obtained for the generic APN multimedia message. Through the example embodiments, negotiation is performed by using an application of the terminal. The header information of the request from the terminal carries a mobile phone number, the WAP gateway then performs authentication to the user according to the check code, and then corresponding service is provided. On the premise of ensuring safety performance, limitations that the user can use only a traditional WAP data link to receive and send the multimedia message under a traditional framework can be resolved; and the WLAN user, the CMNET APN user or other APN users can normally receive and send the multimedia message, so that the user can receive and send the multimedia message without switching to the CMWAP APN under a condition that the user access the network through the WLAN or the CMNETAPN.

### Industrial Applicability

By means of the embodiments of the present disclosure, a check code request of the terminal is received, a check code of the terminal is generated according to the check code request and then sent to the terminal, a service request of the terminal is received and a service is provided for the terminal according to the user identifier of the terminal and the check code in the service request. In this way, the problem caused by the inability to receive or send the multimedia messages via the WLANs is solved, and a solution capable of obtaining the information such as user numbers without the need of the PDP context activation procedure and achieving receiving and sending of the multimedia messages is provided.

Obviously, those skilled in the art should understand that all components or all steps in the present disclosure can be achieved by using a general computation apparatus, can be centralized on a single computation apparatus or can be distributed on a network composed of a plurality of computation apparatuses. Optionally, they can be achieved by using executable program codes of the computation apparatuses, so that they can be stored in a storage apparatus and executed by the computation apparatuses or are manufactured into each integrated circuit component respectively, or a plurality of components or steps therein are manufactured into a single integrated circuit component. Thus, the present disclosure is not limited to combination of any specific hardware and software.

The above is only the example embodiments of the present disclosure, and is not intended to limit the present disclosure. There can be various modifications and variations in the present disclosure for those skilled in the art. Any modifications, equivalent replacements, improvements and the like within the principle of the present disclosure shall fall within the protection scope defined by the claims of the present disclosure.

## Claims

1. A service provision method, comprising:
receiving a check code request of a terminal;
generating a check code of the terminal according to the check code request, and sending the generated check code to the terminal; and
receiving a service request of the terminal, and providing a service for the terminal according to the service request, wherein the service request comprises: the check code and a user identifier of the terminal.

2. The method as claimed in claim 1, wherein the check code request carries at least one of the following information: the user identifier of the terminal, time information and encryption key information.

3. The method as claimed in claim 1 or 2, wherein providing the service for the terminal according to the service request comprises:
receiving the service request of the terminal; and
verifying that an identity of the terminal is legal according to the check code and the user identifier.

4. The method as claimed in claim 3, wherein under a condition that the service is a multimedia message sending service, after it is verified that the identity of the terminal is legal, providing the service for the terminal according to the service request further comprises:
sending, to a multimedia message centre, multimedia message information that the terminal requests to send.

5. The method as claimed in claim 4, wherein under a condition that the multimedia message information that the terminal requests to send is compressed multimedia message information, sending, to the multimedia message centre, the multimedia message information that the terminal requests to send comprises:
decompressing the compressed multimedia message information; and
sending the decompressed multimedia message information to the multimedia message centre.

6. The method as claimed in claim 3, wherein under a condition that the service is a multimedia message receiving service, after it is verified that the identity of the terminal is legal, providing the service for the terminal according to the service request further comprises:
obtaining, from a multimedia message centre according to the service request, multimedia message information requested by the terminal; and
sending the multimedia message information requested by the terminal to the terminal.

7. The method as claimed in claim 6, wherein sending the multimedia message information requested by the terminal to the terminal comprises:
compressing the multimedia message information requested by the terminal; and
sending the compressed multimedia message information to the terminal.

8. A service request method, comprising:
sending a check code request to a Wireless Application Protocol, WAP, gateway;
receiving a check code, wherein the check code is generated by the WAP gateway according to the check code request; and
sending a service request to the WAP gateway, and requesting a service from the WAP gateway according to the service request, wherein the service request comprises: the check code and a user identifier of a terminal.

9. A service provision apparatus, comprising:
a receiving component, configured to receive a check code request of a terminal;
a generating component, configured to generate a check code of the terminal according to the check code request and send the generated check code to the terminal; and
a processing component, configured to receive a service request of the terminal and provide a service for the terminal according to the service request, wherein the service request comprises: the check code and a user identifier of the terminal.

10. A service request apparatus, comprising:
a sending component, configured to send a check code request to a Wireless Application Protocol, WAP, gateway;
a receiving component, configured to receive a check code, wherein the check code is generated by the WAP gateway according to the check code request; and
a processing component, configured to send a service request to the WAP gateway and request a service from the WAP gateway according to the service request, wherein the service request comprises: the check code and a user identifier of a terminal.
